# EUROPEAN PATENT APPLICATION

(11) **EP 1 510 784 A1**
(43) Date of publication of application: **02.03.2005**
(21) Application number: 04019634.7
(22) Date of filing: 18.08.2004
(51) Int. Cl.: G01C 21/34

(54) **Spot registration system and method, search system and method, navigation system and computer program**

(30) Priority: 29.08.2003 JP 2003209707
(71) Applicant: Pioneer Corporation, Meguro-ku, Tokyo (JP)
(72) Inventor: Araki, Nobuya, Pioneer Corporation, Kawagoe-shi Saitama (JP)
(74) Representative: Viering, Jentschura & Partner

(57) **Abstract**

A search system is provided with: a search database (1001); a registration spot database (1002); an association database (1003); a searching device (1201); and a display device (1202). During searching, the searching device searches the search database for search spot data, then searches the association database for association data on the basis of the searched search spot data, and then searches the registration spot database for registration spot data on the basis of the searched association data. The display device displays the searched search spot data and the searched registration spot data.

## Description

### BACKGROUND OF THE INVENTION

### 1. Field of the Invention

The present invention relates to a new spot registration system and method suitably used in searching for a facility name of an individual spot, for example in on-vehicle navigation system or the like. The present invention further relates to a search system for and method of searching for such a facility name of an individual spot, further relates to a navigation system including the spot registration system and search system. The present invention further relates to a computer program product used for the spot registration system and the searching system.

### 2. Description of the Related Art

In a search system of this type, once a user inputs a name of a facilities or a spot (hereinafter referred to as "facility name" as appropriate), for which the user want to search, from an inputting device, by means of a personal computer, Internet and so on, a search is performed on the basis of search data including spot data indicating a facility name existing on a map as well as the inputted name.

If such a search system includes a spot registration system, the user can register an individual spot on the map, and search for (or retrieve) the registered spot. For example, in an on-vehicle navigation apparatus on which such a search system is mounted, the user can search for the registered spot, and set the searched spot (i.e. the searched registered spot) as a departure or destination site, otherwise can set the searched spot as a "stop by site" or "on route site" (see Japanese Patent Application Laid-Open Nos. 2000-227340; 2000-323332; Hei 11-304505; and 2000-005680).

### SUMMARY OF THE INVENTION

In the existing spot registration system, however, the individual spots are registered independently of each other, and in the existing search system, the departure site, the destination site, the "stop by site" and the "on route site" are searched independently of each other. Therefore, in the navigation apparatus including such a spot registration system and such a search system, there is a technical problem of forcing complicatedly the user. For example, even in the case that the user registers a spot (i.e. "stop by site" or "on route site") often searched for as for the same destination site, the user needs to search for the registered spot in each time setting the departure site, the destination site, the "stop by site" and the "on route site".

The present invention has been accomplished in view of the above problems for example. It is therefore an object of the present invention to provide a spot registration system and method allowing an efficient spot data search by registering spot data indicating the facility name in association with another spot data. It is an object of the present invention further to provide a search system and method allowing a simple spot data search using the registered spot data. It is an object of the present invention further to provide a navigation system provided with the spot registration system and the search system. It is an object of the present invention further to provide a computer program product making a computer function as the navigation system.

The above object is achieved by a spot registration system, in which the spot registration system is provided with: a search database for storing a plurality of search spot data each indicating a name of a search spot searchable by a search system; a register device for registering a name of a desired spot as a name of a spot associated with the search spot; a registration spot database for storing registration spot data indicating the name of the desired spot registered by said register device; and an association database for storing association data indicating a relationship between the search spot data and registration spot data.

The above object is achieved by a search system, in which the search system is provided with: a search database for storing a plurality of search spot data each indicating a name of a search spot; a registration spot database for storing registration spot data indicating a name of a registered spot name or a name of a spot registered in association with the search spot; an association database for storing association data indicating a relationship between the search spot data and the registration spot data; a searching device for searching the search database for the search spot data, then searching the association database for the association data on the basis of the searched search spot data, and then searching the registration spot database for the registration spot data on the basis of the searched association data; and a display device for displaying the searched search spot data and the searched registration spot data in a predetermined format.

The above object is achieved by a navigation system, in which the navigation system is provided with: a search system having: a search database for storing a plurality of search spot data each indicating a name of a search spot; a registration spot database for storing registration spot data indicating a name of a registered spot or a name of a spot registered in association with the search spot; an association database for storing association data indicating a relationship between the search spot data and the registration spot data; a searching device for searching the search database for search spot data, then searching the association database for the association data on the basis of the searched search spot data, and then searching the registration spot database for the registration spot data on the basis of the searched association data; and a display device for displaying the searched search spot data and the searched registration spot data in a predetermined format; a positioning device for positioning a current position; and a route guidance device for performing a predetermined kind of route guidance, on the basis of the positioned current position as well as at least one of the registration spot data and the search spot data searched by said searching device.

The above object is achieved by a spot registration method, in which the spot registration method is for registering a desired spot, and provided with: a first generating process of generating a plurality of search spot data each indicating a name of the desired spot; and a second generating process of generating association data indicating a relationship between (i) at least one of the plurality of search spot data each indicating a name of a search spot searchable by a search system and (ii) at least one of the plurality of registration spot data indicating a name of a registered spot associated with the search spot relating to the at least one search spot data.

The above object is achieved by a searching method, in which the searching method is provided with: a first searching process of searching for at least one of a plurality of search spot data each indicating a name of a search spot; a second searching process of searching for at least one of a plurality of association data each indicating a relationship between the search spot data and registration spot data indicating a name of a registration spot which is associated with the at least one search spot; and a third searching process of searching for at least one of the plurality of registration spot data, on the basis of the searched association data.

The above object is achieved by a computer program product, in which the computer program product is in a computer-readable medium for tangibly embodying a program of instructions executable by a computer provided for a search system having: a search database for storing a plurality of search spot data each indicating a name of a search spot; a registration spot database for storing registration spot data indicating a name of a registered spot or a name of a spot registered in association with the search spot; an association database for storing association data indicating a relationship between the search spot data and the registration spot data; a searching device for searching the search database for search spot data, then searching the association database for the association data on the basis of the searched search spot data, and then searching the registration spot database for the registration spot data on the basis of the searched association data; and a display device for displaying the searched search spot data and the searched registration spot data in a predetermined format, wherein the program of instructions is for making the computer function as at least said searching device.

The nature, utility, and further features of this invention will be more clearly apparent from the following detailed description with reference to preferred embodiments of the invention when read in conjunction with the accompanying drawings briefly described below.

### BRIEF DESCRIPTION OF THE DRAWINGS

FIG. 1 is a block diagram illustrating a fundamental construction of the spot registration system according to an embodiment of the present invention.
FIG. 2 is a block diagram illustrating a block diagram illustrating a fundamental construction of the search system according to an embodiment of the present invention.
FIG. 3 is a block diagram illustrating a fundamental construction of the navigation apparatus according to an example of the present invention.
FIG. 4 is a view generally illustrating structures of the search database, the registration spot database and the association database according to an example of the present invention.
FIG. 5 is a view generally illustrating an exemplary display screen in the spot registration process according to an example of the present invention.
FIG. 6 is a flow chart illustrating an operational flow of the spot registration process performed in the navigation apparatus according to an example of the present invention.
FIG. 7 is a view generally illustrating an exemplary display screen in various editing processes of the spot registration process according to an example of the present invention.
FIG. 8 is a flow chart illustrating one operational flow of various editing processes of the spot registration process performed in the navigation apparatus according to an example of the present invention.
FIG. 9 is a view generally illustrating another exemplary display screen in various editing processes of the spot registration process according to an example of the present invention.
FIG. 10 is a flow chart illustrating another operational flow of various editing processes of the spot registration process performed in the navigation apparatus according to an example of the present invention.
FIG. 11 is a flow chart illustrating an operational flow of a predetermined navigation process performed in the navigation apparatus according to an example of the present invention.
FIG. 12 is a flow chart illustrating another operational flow of a predetermined navigation process performed in the navigation apparatus according to an example of the present invention.
FIG. 13 is a view generally illustrating an exemplary display screen in the searching process according to an example of the present invention.
FIG. 14 is a flow chart illustrating another operational flow of a predetermined navigation process performed in the navigation apparatus according to an example of the present invention.
FIG. 15 is a flow chart illustrating another operational flow of a predetermined navigation process performed in the navigation apparatus according to an example of the present invention.
FIG. 16 is a block diagram illustrating a fundamental construction of the communication navigation apparatus according to an example of the present invention.

### DETAILED DESCRIPTION OF THE PREFERRED EMBODIMENTS

### (Embodiments)

Embodiments of the present invention will now be discussed.

### (Spot Registration System)

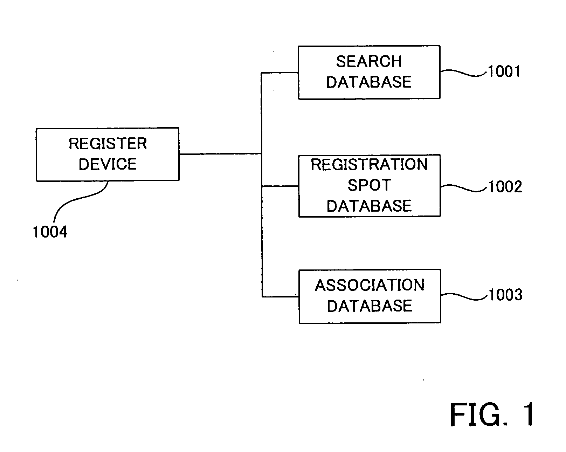

With reference to FIG. 1, an embodiment of the spot registration system according to the present invention will be discussed. FIG. 1 is a block diagram illustrating this embodiment.

As shown in FIG. 1, this embodiment is provided with three databases, i.e. (i) a search database 1001, (ii) a registration spot database 1002 and (iii) an association database 1003. The search database 1001 stores a plurality of search spot data each indicating a name relating to a search spot that can be searched by the search system. The registration spot database 1002 stores registration spot data indicating a name relating to a registration spot that is registered by a register device 1004. The association database 1003 stores association data indicating a relationship between the search spot data and the registration spot data. On the other hand, the register device 1004 is adapted to register a name of a desired spot as a name relating to a spot associated with the search spot.

According to the spot registration system in this embodiment, the search spot data is for indicating a name of a spot or facilities, as a name relating to a search spot. The registration spot data is for indicating the name of the spot or facilities registered by the register device 1004. The association data is for indicating a relationship between search spot data and registration spot data relating to a registration spot registered in association with a search spot relating to the search spot data by the register device 1004. Associating the search spot data and the registration spot data in the association data is achieved by associating a predetermined item relating to a registration spot including registration spot data with a predetermined item relating to a search spot including search spot data. For example, such an "associating" is achieved by associating the predetermined item such as an individual ID given to each registration spot including registration spot data or coordinates information relating to a registration spot including registration spot data with the predetermined item such as an individual ID given to each search spot including search spot data or coordinates information relating to a search spot including search spot data.

These search database 1001, registration spot database 1002 and association database 1003 may be embodied in, as a whole or in part, a large volume storage medium such as a optical disk device, a hard disk device or a memory device, that may be mounted within an on-vehicle unit in a navigation system, or may be mounted within a server apparatus that is connected via a communication network or line to an on-vehicle unit in a communication navigation system. Alternatively, these databases may be embodied in an inner structure of a cell phone, personal computer or the like used by a user who register a "spot-on-a-map" (or a name of a desired spot), or embodied in an inner structure of a server apparatus that is connected via Internet to the cell phone, personal computer or the like.

The register device 1004 is adapted to generate registration spot data indicating the name of the desired spot at least, and to generate association data indicating a relationship between the generated registration spot data with at least one of a plurality of search spot data, during the operation of the spot registration system, i.e. during registrating a spot,. The registration spot data generated by the register device 1004 is stored in the registration spot database 1002, while the association data generated by the register device 1004 is stored in the association database 1003. For example, new registration spot data is generated by the register device 1004 and added to another existing registration spot data indicating names of the already registered spots. And then the registration spot data including the new registration spot data is stored into the registration spot database 1002. Accompanying with this, new association data is generated by the register device 1004 and then stored into the association database 1003. Alternatively, association data indicating a relationship between the newly generated registration spot data and the already existing registration spot data is generated and then stored into the association database 1003. The "association" of the association data is achieved by associating these registration spot data or the predetermined items relating to the registration spot data (e.g. individual ID, coordinates information and so on) between the new data and the existing data.

The register device 1004 may be embodied in, as a whole or in part, in a processing device such as a system controller, computer or the like, that may be mounted within an on-vehicle unit in a navigation system, or may be mounted within a server apparatus that is connected via a communication network or line to an on-vehicle unit in a communication navigation system. Alternatively, the register device 1004 may be embodied in an inner structure of a cell phone, personal computer or the like used by a user who register a "spot-on-a-map" ( or the name of the desired spot), or embodied in an inner structure of a server apparatus that is connected via Internet to the cell phone, personal computer or the like.

Accordingly, in this embodiment, the registration spot data is generated by the register device 1004 and then stored in the registration spot database 1002, so that the desired spot can be registered. The association data is generated by the register device 1004 and then stored in the association database 1003, so that the name of the desired spot can be registered in association with at least one search spot.

Therefore, according to this embodiment, searching for one search spot from among the plurality of search spots, with reference to the search database 1001, makes it possible to identify the association data indicating the predetermined item relating to the registration spot registered in advance by the register device 1004 in association with said one search spot, further with reference to the association database 1003. Therefore, as a search result, (i) the search spot data and (ii) one or more registration spot data, which are registered in advance into the registration spot database 1002 by the user as registration spot data corresponding to the search spot data, can be obtained quickly and easily, via the association data.

In an aspect of the spot registration system in this embodiment, the search database 1001 further stores first identification information, which is assigned uniquely to the search spot data, in association with the search spot data. Additionally, the registration spot database 1002 further stores second identification information, which is assigned uniquely to the registration spot data, in association with the registration spot data. Additionally, the association database 1003 stores, as the association data, data indicating one-on-one or many-to-one relationship between the first identification information and the second identification information.

According to this aspect, at the search database 1001, a unique (or specific) ID as the first identification information is given respectively to each of the plurality of search spot data. While also at the registration spot database 1002, a unique ID as the second identification information is given respectively to each of one or more registration spot data. At the association database 1003, the association data associates the first identification information as a predetermined item relating to a search spot with the second identification information as a predetermined item relating to a registration spot.

On registering a spot, the register device 1004 gives the second identification information to the generated registration spot data, and generates association data indicating a relationship between the first identification information given to at least one of the plurality of the search spot data and the second identification information. Then, the registration spot data generated by the register device 1004 is stored into the registration spot database 1002, in association with the second identification information given to the registration spot data.

Therefore, according to this aspect, referring to the association database 1003, on the basis of the first identification information corresponding to the search spot data relating to the searched search spot, makes it possible to identify the association data indicating one or more second identification information associated with the first identification information. Then, referring to the registration spot database 1002, via the second identification information indicated by the association data, makes it possible to obtain quickly and easily the registration spot data relating to the registration spot that is registered in association with the search spot.

In another aspect of the spot registration system in this embodiment, the search database 1001 further stores position information of the search spot, in association with the search spot data. Additionally, the association database 1003 stores, as the association data, data indicating a relationship a one-on-one or many-to-one relationship between the registration spot data and at least one of the position information of the search spot data and the search spot data.

According to this aspect, the position information of the search spot to be stored into the search database 1001 in association with the search spot data includes at least a set of latitude and longitude indicating a position of the search spot.

On the other hand, at the association database 1003, the association data is for associating (i) at least one of the search spot data and the position information of the search spot as a predetermined item relating to the search spot with (ii) one or more registration spot data. Or the association data is for associating (i) at least one of the search spot data and the position information of the search spot as a predetermined item relating to the search spot with (iii) predetermined items relating to one or more registration spots.

On registering a spot, the register device 1004 generates association data indicating a relationship between (i) the generated registration spot data and either one of (ii) at least one of the plurality of search spot data and (iii) the position information of at least one of the search spots relating to the plurality of search spot data. Alternatively, on registering a spot, the register device 1004 generates association data indicating a relationship between (i) a predetermined item relating to the registration spot and either one of (ii) at least one of the plurality of search spot data and (iii) the position information of at least one of the search spots relating to the plurality of search spot data.

Therefore, according to this aspect, referring to the association database 1003, on the basis of either one of the search spot data relating to the searched search spot and the position information of the searched search spot, makes it possible to identify registration spot data associated with either one of the search spot data and the position information of the searched search spot. Alternatively, referring to the association database 1003, on the basis of either one of the search spot data relating to the searched search spot and the position information of the searched search spot, makes it possible to identify association data indicating a predetermined item relating to the registration spot associated with either one of the search spot data and the position information of the search spot corresponding this search spot data.

In another aspect of the spot registration system in this embodiment, the register device 1004 further edits or deletes the registration spot data stored into the registration spot database 1002.

According to this aspect, the register device 1004 edits or deletes the registration spot data, in addition to registering new desired registration spot data, and edits or deletes the association data in response to editing or deleting of the registration spot data. Therefore, according to this aspect, performing various edit (or delete) processes makes it possible to construct the registration spot database 1002 and the association database 1003 in a desired form.

In another aspect of the spot registration system in this embodiment, the register device 1004 performs such a registration (registering) as a user registration.

According to this aspect, user can perform various editings or spot registration process mentioned above, by means of the register device 1004 such as a keyboard, a panel switch, a mouse, an audio inputting device and so on. Therefore, the user can construct the registration spot database 1002 or the association database 1003 by him/herself (or according to his/her preference) by means of the register device 1004.

In another aspect of the spot registration system in this embodiment, the register device 1004 performs such a registration (or registering) as an automatic registration in response to a predetermined process result.

According to this aspect, the register device 1004 further performs a registration of a desired spot, using name data, as an automatic registration, if the name data indicating a name relating to the desired spot is inputted. On the other hand, if the search system searches the plurality of search spots for at least one search spot and name data indicating a name relating to a desired spot is inputted, it is possible to register the name relating to the desired spot automatically, as a spot associated with at least one search spot (or the searched search spot), using the inputted name data and the search spot data relating to the searched search spot. Furthermore, if an instruction of performing various editings is inputted, the register device 1004 can perform various editings automatically.

### (Search System)

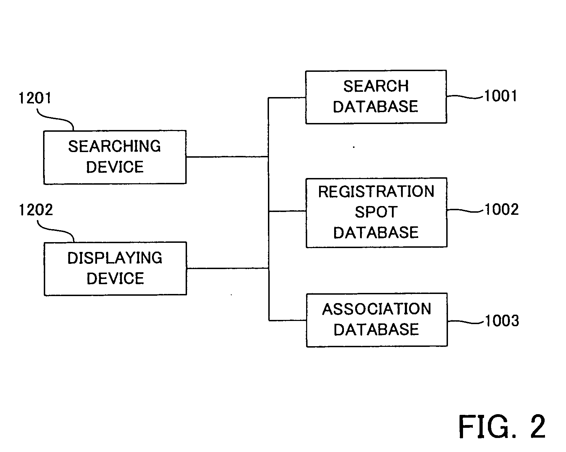

Now, with reference to FIG. 2, an embodiment of the search system according to the present invention will be discussed. FIG. 2 illustrates this embodiment in a block diagram.

As shown in FIG. 2, the embodiment of the search system is provided with, similarly to the spot registration system mentioned above, a search database 1001, a registration spot database 1002 and an association database 1003. The embodiment of the search system is further provided with a searching device 1201 and a display device 1202. The searching device 1201 searches the search database 1001 for the search spot data, and searches the association database 1003 for the association data on the basis of the searched search spot data, and searches the registration spot database 1002 for the registration spot data on the basis of the searched association data. The display device 1202 displays the searched search spot data and the searched registration spot data in a predetermined format.

According to the search system in this embodiment, during its operation, i.e. during a search, if the name data indicating a name of a spot or facilities is inputted as a name of the search spot, the searching device 1201 refers to the search database 1001, with using the inputted name data, and searches for the search spot data relating to the inputted name data, so that search for at least one search spot from among the plurality of search spots.

Furthermore, the searching device 1201 can refer to the association database 1003 on the basis of the searched search spot data, and thereby identify the association data indicating a predetermined item relating to a registration spot registered as associated in advance with the searched search spot data.

Therefore, the searching device 1201 can obtain as a search result, (i) the search spot data and (ii) one or more registration spot data, which are registered in advance into the registration spot database 1002 by the user as registration spot data associated with the search spot data, quickly and easily, via the association data.

This searching device 1201 may be embodied in, as a whole or in part, in a processing device such as a system controller, computer or the like, which may be mounted within an on-vehicle unit in a navigation system, or may be mounted within a server apparatus that is connected via a communication network or line to an on-vehicle unit in a communication navigation system. Alternatively, the searching device 1201 may be embodied in an inner structure of a cell phone, personal computer or the like used by a user who searches for a "spot-on-a-map", or embodied in an inner structure of a server apparatus that is connected via Internet to the cell phone, personal computer or the like.

Then, from a display as an example of the display device 1202, the registration spot and the search spot data obtained by the searching device 1201 as the search result is displayed in a predetermined format.

Therefore, in this embodiment, the user can search for at least one of the plurality of search spots, as well as the desired spot registered in advance as a spot associated with the search spot.

In an aspect of the search system according to the present invention, the search database 1001 further stores the first identification information given uniquely to the search spot data, in association with the search spot data. Additionally, the registration spot database 1002 further stores the second identification information given uniquely to the registration spot data, in association with the registration spot data. Additionally, the association database 1003 stores, as the association data, data indicating the one-on-one or many-to-one relationship between the first identification information and the second identification information. The searching device 1201 searches for the association data on the basis of the first identification information relating to the searched search spot data, and searches for the registration spot data on the basis of the second identification information in the searched association data.

According to this aspect, the searching device 1201 can refer to the association database 1003 on the basis of the first identification information corresponding to the search spot data relating to the searched search spot and thereby identify the association data indicating (or including) one or more second identification information associated with the first identification information. Then, the searching device 1201 can refer to the registration spot database 1002 via the second identification information indicated by the association data and thereby obtain quickly and easily the registration spot data relating to the registration spot registered in advance as the spot associated with the search spot relating to the association data.

In another aspect of the search system according to the present invention, the search database 1001 further stores a position information of the search spot, in association with the search spot data. Additionally, the association database 1003 stores, as the association data, data indicating the one-on-one or many-to-one relationship between the registration spot data and at least one of the position information and the search spot data. The searching device 1201 searches for the association data, on the basis of at least one of the searched search spot data and the search spot data position information.

According to this aspect, the searching device 1201 can refer to the association database 1003 on the basis of either one of the search spot data relating to the searched search spot and the position information of the search spot corresponding to the search spot data, and thereby identify the association data indicating the registration spot data associated with either one of the search spot data and the position information of the search spot corresponding to the search spot data.

Furthermore, according to this aspect, even if the position information is not stored in the search database 1001, in association with the search spot data relating to the searched search spot, it is possible to identify the association data by referring to the association database 1003 on the basis of the search spot data.

In another aspect of the search system according to the present invention, the association database 1003 further stores the association data indicating an inter-relationship between at least two of the registration spot data stored into the registration spot database 1002. The searching device 1201 searches the registration spot database 1002 for at least one registration spot data, and searches the association database 1003 for the association data, on the basis of the searched registration spot data (i.e. the at least one of the registration spot data), and further searches the registration spot database 1002 for the registration spot data, on the basis of the searched association data. The searching device 1201 displays the further searched registration spot data.

According to this aspect, if the name data indicating the name of spot or facilities as a name of the registration spot, the searching device 1201 refers to the registration spot database 1002 by means of the inputted name data, and searches for the registration spot data relating to the inputted name data.

Furthermore, the searching device 1201 can refer to the association database 1003 on the basis of the searched registration spot data, and thereby identify the association data indicating a predetermined item relating to another registration spot registered in advance as associated with the registration spot data relating to the searched registration spot. Therefore, it is possible to obtain quickly and easily at least one registration spot data as a search result, as well as another registration spot data registered in advance by the user into the registration spot database 1002 as associated with the one registration spot data.

The display device 1202 displays the registration spot data obtained by the searching device 1201, as the search result.

Therefore, according to this aspect, the user can search the plurality of registration spots for at least one registration spot, and thereby search for a desired spot registered in advance as a spot associated with the registration spot.

In another aspect of the search system according to the present invention, a register device 1004 is further provided. The register device 1004 is for registering a name of a desired spot, as a name of a spot associated with the search spot.

According to this aspect, the same construction as the spot registration system mentioned above is included. Therefore, the user can search the plurality of search spots for at least one search spot and thereby search for the desired spot registered in advance as a spot associated with the search spot.

### (Navigation System)

In an embodiment of the navigation system according to the present invention, there are provided with: the embodiment of the search system mentioned above (including various aspects thereof); a position device for positioning or measuring a current position; a route guidance device for performing a predetermined kind of route guidance on the basis of the positioned or measured current position as well as at least one of the registration spot data and the search spot data searched by the searching device 1201.

According to an embodiment of the navigation system, for example, it is possible to input either one of (i) the search spot relating to the search spot data searched by the searching device and (ii) registration spot relating to the registration spot data searched by the searching device, as an "on route site" or "stop by site", in addition to as a departure or destination site. That is, the user can search for the departure site, destination site, "on route site" and "stop by site" not independently of each other but in association with each other.

On the other hand, if the search system includes the spot registration system, it is possible to register a desired spot as a registration spot, or register at least one search spot and a desired spot, in a manner that they are associated with each other as a departure site, destination site, "on route site" or "stop by site".

Then, a predetermined kind of route guidance is performed on the basis of a current position that may be obtained in a GPS or self-measuring system, with using such a search feature. In a route guidance, for example, an optimal route from a departure site to a destination site, or an optimal route from a departure site to a destination site via an "on route site" or "stop by site" is obtained and then the obtained optimal route is displayed with the current position by a route guidance device such as a display and the like. Alternatively, a route guidance is audibly outputted by a route guidance device such as a speaker and the like.

In an aspect of the navigation system according to the present invention, there is provided with a center apparatus and a navigation terminal apparatus, which are connectable to each other via a communication network or line. At least one or one portion of the search database 1001, the registration spot database 1002 and the association database 1003 are included in/at the center apparatus. On the other hand, the position device and the route guidance device are included in/at the navigation terminal apparatus.

According to this aspect, the navigation system herein can be constructed as a so-called "communication navigation system". Particularly, in a practical use, it is very advantageous to take the aforementioned benefit of the search system of this invention, while taking another benefit of the communication navigation system such as a reduction in size or cost of the processing unit or storage device in the on-vehicle unit, or an improvement in management or flexible updating of the search database 1001, the registration spot database 1002 and the association database 1003.

### (Spot Registration Method)

In an embodiment according to the present invention, the registration spot method is for registering a desired spot, and includes a registration spot data generating process (a first generating process) and an association data generating process (a second generating process). In the registration spot generating process, the plurality of registration spot data each indicating a name of a desired spot is generated. Then, in the association data generating process, association data is generated, in which the association data indicates a relationship between (i) at least one of the plurality of search spot data each indicating a name of a search spot that is searchable by the search system and (ii) at least one of the plurality of registration spot data, indicating a name of a registration spot associated with the search spot relating to at least one search spot data.

According to an embodiment of the registration spot method, similarly to the spot registration system mentioned above, once a search spot is searched from among the plurality of search spots, it is possible to obtain, as a search result, the search spot data, as well as one or more registration spot data that is registered in advance by the user and that is registered as the corresponding data of the search spot data, quickly and easily, via the association data.

Incidentally, the embodiment of the registration spot method of the invention can take various aspects, corresponding to various aspects of the embodiment of the spot registration system of the invention mentioned above.

### (Searching Method)

In an embodiment of the present invention, the searching method includes a search spot data searching process (a first searching process), an association data searching process (a second searching process) and a registration spot data searching process (a third searching process). In the search spot data searching process, at least one of the plurality of search spot data each indicating a name of a search spot is searched. Then, in the association data searching process, at least one of the plurality of association data each indicating a relationship between the search spot data and the registration spot data on the basis of the searched search spot data. In the registration spot data searching process, at least one of the plurality of registration spot data is searched, on the basis of the searched association data.

According to the embodiment of the searching method of the invention, similarly to the embodiment of the search system mentioned above, the user can search the plurality of search spots for at least one search spot and also search for a desired spot registered in advance as a spot associated with the search spot.

Incidentally, the embodiment of the searching method can also take various aspects, corresponding to various aspects of the embodiment of the search system mentioned above.

### (Computer Program Product)

In an embodiment of the present invention, the computer program product is for a search by controlling a computer provided for the embodiment of the search system (including various aspects) according to the present invention, and makes the computer function as at least the searching device 1201.

According to an embodiment of the computer program product of the present invention, the search system mentioned above may be embodied relatively easily, by reading and running the computer program product from a record medium, such as a ROM, a CD-ROM, a DVD-ROM, a hard disk and so on, storing the computer program therein/thereon, or by downloading the computer program product to the computer via the communicating device and running it.

Incidentally, the embodiment of the computer program product can take various aspects, corresponding to various aspects of the embodiment of the search system mentioned above.

These effects and other advantages or benefits in this embodiment will be more apparent from the following Examples.

As discussed above, according to the embodiment of the spot search system, there are provided with: a register device 1004: a search database 1001: a registration spot database 1002: and an association database 1003. On the other hand, according to the embodiment of the registration spot method, there are provided with: a plurality of spot data generating process; and an association data generating process. Thereby, once a search spot is searched from among the plurality of search spots, it is possible to obtain, as a search result, the search spot data, as well as one or more registration spot data that is registered in advance by the user and that is registered as the corresponding data of the search spot data, quickly and easily, via the association data..

Furthermore, as discussed above, according to the embodiment of the search system, there are provided with: a searching device 1201; a display device 1202; a search database 1001; a registration spot database 1002; and an association database 1003. On the other hand, according to the embodiment of the searching method, there are provided with: a search spot data searching process; an association data searching process based on the search spot data; and a registration spot data searching process based on the association data. Thereby, the user can search the plurality of search spots for at least one search spot and also search for a desired spot registered in advance as a spot associated with the search spot.

### (Examples)

Now, with reference to drawings, examples of the navigation system including the spot registration system and the search system according to the present invention will be discussed.

### (Fundamental Construction)

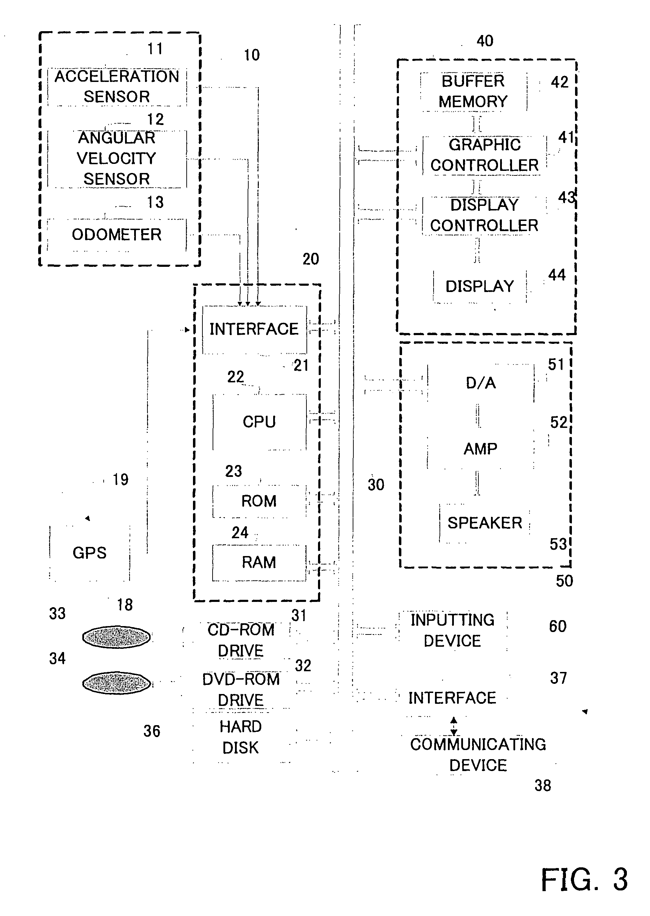

Firstly, with reference to FIG. 3, a fundamental construction of the navigation apparatus in this example will be discussed. FIG. 3 is a block diagram illustrating a construction of the navigation apparatus in this example.

As shown in FIG. 3, the navigation apparatus is provided with: a sensor portion 10; a GPS receive portion 18; a control portion 20; a data bus 30; a CD-ROM drive 31; a DVD-ROM drive 32; a hard disk 36; a video output portion 40; an audio output portion 50; an inputting device 60; and a communicating device 38.

The sensor portion 10, which is for sensing information about. a movement of a navigation object itself, is provided with: an acceleration sensor 11; an angular velocity sensor 12; and an odometer 13. The acceleration sensor 11 is for sensing an acceleration of the navigation object, and is capable of further calculating a velocity from the sensed acceleration. The angular velocity sensor 12 is for sensing an angular velocity of the navigation object. The odometer 13 is for sensing a travel distance of the navigation object.

The GPS receive portion 18, which is a specific example of the "positioning device" in the navigation system of the invention, is capable of identifying a current position of the navigation object, by receiving information in radio waves 19 from GPS satellites, for example by means of a receiver or the like.

The control portion 20, which is for controlling entirely the navigation apparatus, is provided with: an interface 21; a CPU 22; a ROM 23 and a RAM 24. The interface 21 transfers data with the sensor portion 10 and the GPS receive portion 18, and outputs the received data to the CPU 22. The CPU 22 identifies the current position of the navigation object, on the basis of the data inputted via the interface 21. The CPU 22 performs a computation or arithmetic process for controlling entirely the navigation apparatus. Particularly in this embodiment, the CPU 22 controls the CD-ROM drive 31, the DVD-ROM drive 32 or the hard disk 36, and reads map data from a CD-ROM 33, a DVD-ROM 34 or the hard disk 36, otherwise receives the map data at the communicating device 38 via the communication network 100. Then, it performs a navigation processing, on the basis of the received map data. The ROM 23, in which a microprogram or the like is recorded, defines an operation of the control portion 20. The RAM 24, which may include a volatile semiconductor memory such as a DRAM, a SDRAM or the like, is used as a record medium on/in which data is recorded during the operation of the CPU 22.

Incidentally, as mentioned later, the control portion 20 functions as a specific example of the "route guidance device" in the navigation system of the invention and as the "searching device" in the search system of the invention, and further as the "register device" in the spot registration system of the invention. However, as shown in FIG. 3, these functions may be achieved by a single unit of control portion 20, or may be achieved by a plurality of control portions 20 disposed correspondingly to each component (i.e. the register device, the searching device and the route searching device).

The data bus 30 is used for transferring data respectively with the control portion 20, the CD-ROM drive 31, the DVD-ROM drive 32, the hard disk 36, the video output portion 40, the audio output portion 50, the inputting device 60, and the interface 37.

The CD-ROM drive 31 or the DVD-ROM drive 32 is a device for reading the CD-ROM 33 or the DVD-ROM 34, on/in which original data including the map data is stored.

The hard disk 36 can replace the aforementioned CD-ROM 33 or DVD-ROM 34, for storing the map data, or for reading the map data, if needed, under control of the CPU 22.

The video output portion 40, which is a specific example of the "display device" in the search system of the invention, and is provided with: a graphic controller 41; a buffer memory 42; a display control portion 43; and a display 44, displays a road condition or a route guidance, in response to the navigation process, under control of the control portion 20, or displays a screen for inputting an instruction from the outside via the inputting device 60. The graphic controller 41, which may include a microcomputer or the like, is for controlling entirely the displaying process. The buffer memory 42, which may include a semiconductor memory such as a DRAM or the like, stores video data to be displayed, and inputs/outputs the video data, in accordance with an input/output instruction of the graphic controller 41. The display control portion 43 controls the display 44 and performs the displaying process, under control of the graphic controller 41. The display 44, which may include an LCD device, a CRT display or the like, actually displays the video data.

The audio output portion 50, which is provided with: a digital-analog converter 51; an amplifier 52; and a speaker 53, outputs sound, in response to the navigation process, under control of the control portion 20. The digital-analog converter 51 converts a digital audio signal outputted within the navigation apparatus into an analog audio signal. The amplifier 52 amplifies the converted analog audio signal and controls the output level. The speaker 53 converts the amplified analog audio signal outputted from the amplifier 52 into sound, and outputs the sound.

The inputting device 60, which may include a remote controller, a controller, a touch panel and so on, receives an external instruction to the navigation apparatus. Furthermore, the inputting device 60 may include an audio inputting device for receiving an audio input directly from the user.

The interface 37 controls an input/output between each component of the navigation apparatus and data that may be transferred by the communicating device 38 with data center for example.

The communicating device 38, which is provided with a transceiver or the like capable of transmitting and receiving data via a wired or unwired communication line, transmits and receives necessary information, for example by performing a data transfer with the data center.

### (Operation of Navigation Apparatus)

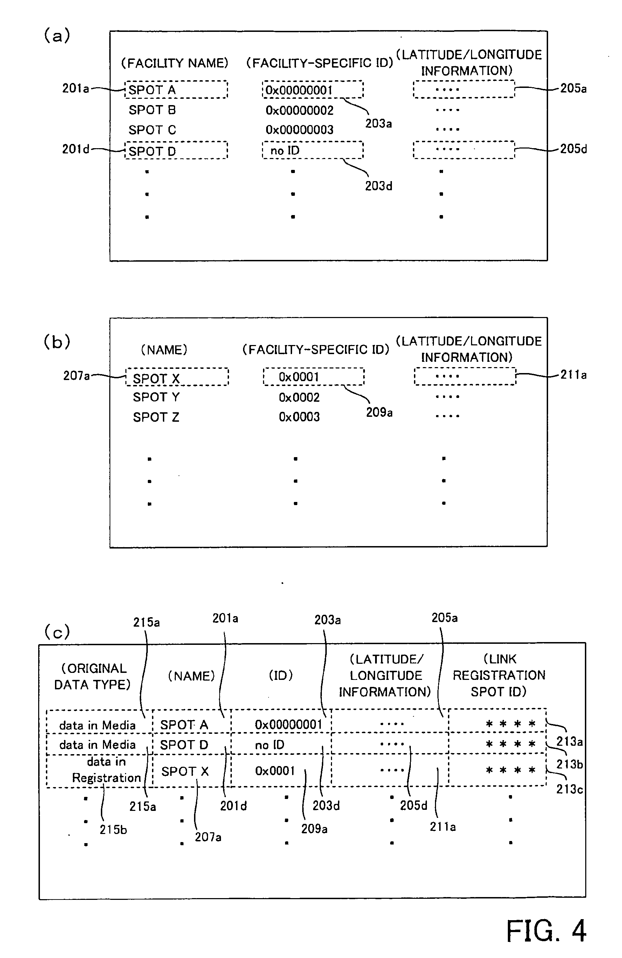

Now, with reference to FIG. 4 to FIG. 15, an operation of the navigation apparatus will be discussed.

Firstly, with reference to FIG. 4, an explanation will be made to the search database, the registration spot database and the association database each stored in the CD-ROM 33, the DVD-ROM 34, and the hard disk 36 and so on. FIG. 4(a) schematically illustrates a general structure of the search database. FIG. 4(b) schematically illustrates a general structure of the registration spot database. FIG. 4(c) schematically illustrates a general structure of the association database.

In the search database, search spot data 201 (201a to 201d) may be stored, in association with (i) the first identification information 203 (203a to 203d) assigned uniquely to the search spot data 201 and (ii) position information 205 (205a to 205d) of the search spot. Or the search spot data 201 may be stored in association with either one of the first identification information 203 and the position information 205.

In FIG. 4 (a), an attention will be made to two search spot data 201a and 201d relating to two spots, spot A and spot D, respectively. The search spot data 201a indicating a name relating to the spot A, "spot A", is stored in association with a facility specific ID that is given as the first identification information 203a "0x00000001" and position information 205a of the spot A (hereinafter referred to as "spot A position information"), "....". On the other hand, as shown in FIG. 4 (a), the search spot data 201d indicating a name relating to a spot D, "spot D" is stored in association with position information 203d of the spot D (hereinafter referred to as "spot D position information"), "...." 203d. In this case, the first identification information 203d, "no ID", indicating that a facility specific ID is not assigned as the first identification information.

On the other hand, as shown in fig 4 (b), in the registration spot database, registration spot data 207 (207a...) is stored in association with the second identification information 209 (209a...) and position information 211 (211a...) of the registration spot. The position information 211 includes a set of latitude and longitude at least.

In FIG. 4 (b), an attention will be to the registration spot data 207a indicating a name relating to a registration spot X, "spot X". The registration spot data 207a is stored in association with a facility specific ID "0x0001" 209a that is given uniquely as the second identification information 209 and position information 211 of the spot X (hereinafter referred to as "spot X position information") "....".

In FIG. 4 (c), in the association database, association data 213 (213a to 213c) indicating a relationship between (i) the search spot data 201 relating to at least one search spot and (ii) the registration spot data 207 relating to at least one registration spot, or an inter-relationship between two registration spot data 207 relating to at least two registration spots is stored. As shown in FIG. 4 (c), the association data 213 associates the at least one search spot data 201 with the position information 205 of the search spot relating to this search spot data 201 and the first identification information 203 given uniquely to this search spot data 201. And the association data 213 further associates the at least one search spot data 201 with the second identification information 209 given to the registration spot data 207 relating to one or more registration spots associated with this at least one search spot data 201. Also in this example, the association data 213 further associates identification data 215a indicating that the search spot data 201a included in the association data 213 is stored in the search database, with this search spot data 201a. Definitely, the identification data 215a indicates "data in Media" which means the search spot data 201a is stored in the search database. Incidentally, in the search database, if the unique first identification information 203 is not assigned to the search spot data 201, the association data 213 associates at least search spot data 201 with the position information 205 of the search spot relating to this search spot data 201.

As shown in FIG. 4 (c), the association data 213 associates at least one registration spot data 207 stored in the registration spot database with the second identification information 209 given uniquely to this registration spot data 207 as well as the position information 211 of the registration spot relating to this registration spot data 207. And the association data 213 further associates the second identification information 209 given uniquely to the registration spot data 207 relating to another registration spot associated with the registration spot relating to at least one registration spot data 207, with at least one registration spot data 207. Also in this example, the association data 213 relating to the registration spot further associates identification data 215b indicating that the registration spot data 207a included in the association data 213 is stored in the registration spot database, with the registration spot data 207. Definitely, the identification data 215b indicates "data in Registration" which means the registration spot data 207a is stored in the registration spot database.

In FIG. 4 (c), an attention will be made to three association data 213a, 213b and 213c. Two of three, i.e. association data 213a and 213b, relate to two search spots, spot A and spot D. One association data 213c relates to the registration spot X. The association data 213a associates the search spot data 201a indicating the name "spot A", with the facility specific ID "0x00000001" given to the search spot data 201a as the first identification information 203a and with the spot A position information "...." 205a, and further with the identification data 215a indicating "data in Media ". On the other hand, the second identification information 209 given to the registration spot data 207 relating to the registration spot associated with the spot A is associated by the association data with the search spot data 201a.

On the other hand, the association data 213b relating to the spot D associates the search spot data 201d indicating the name "spot D" with the spot D position information "...." 205d as well as data indicating "no ID" given to the search spot data 201d as the first identification information 203d, and further with the identification data 215a indicating "data in Media". Furthermore, the second identification information 209 given to the registration spot data 207 relating to the registration spot associated with the spot D is associated by the association data 213b with the search spot data 201d.

Furthermore, the association data 213c relating to the spot X associates the registration spot data 207a indicating the name "spot X" with the spot X position information "...." 211a and the facility specific ID "0x0001" given to the search spot data 207a as the second identification information 209a, and further with the identification data 215b indicating "registration spot data". Furthermore, the second identification information 209 given to the registration spot data 207 relating to another registration spot associated with the spot X is associated by the association data 213c with the registration spot data 207a.

Incidentally, in the following discussion or explanation, (i) the search spot data 201 included in the association data 213 relating to the search spot, and (ii) the registration spot data 207 included in the association data 213 relating to the registration spot are referred to as "parent data" respectively.

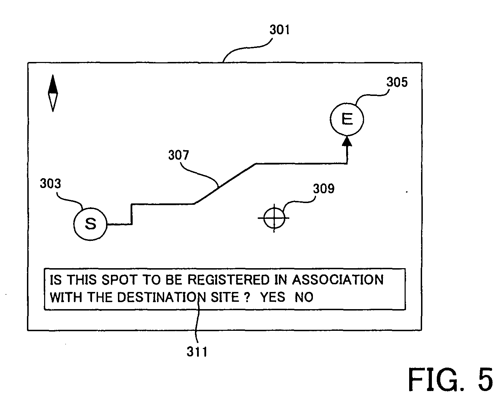

Now, with reference to FIG. 5 to FIG. 10, an explanation will be made to a spot registration process performed by the spot registration system included in the navigation apparatus in this example.

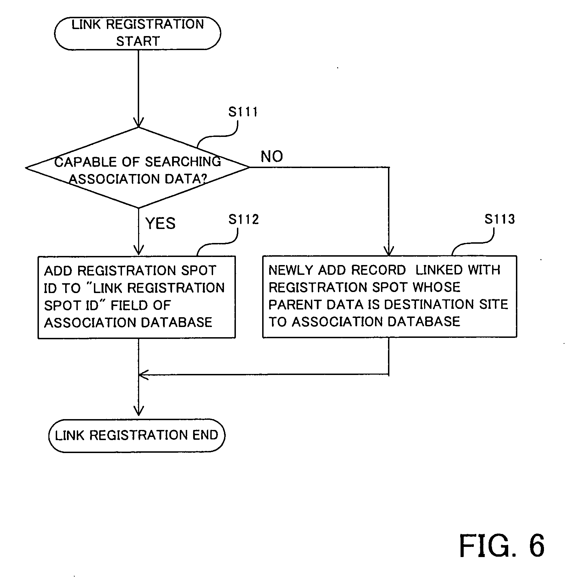

Firstly, with reference to FIG. 5 and FIG. 6, a fundamental operation of the spot registration process will be discussed. FIG. 5 schematically illustrates a screen displayed on the display 44 to prompt the user to proceed the spot registration processing during operation. FIG. 6 illustrates a fundamental operational flow of the spot registration process. In this example, the spot registration system is generally constructed in the navigation apparatus with the search database, the registration spot database and the association database stored in the CD-ROM 33, the DVD-ROM 34, the hard disk 36 and so on, and further with the control portion 20.

Incidentally, according to this example, the spot registration system may further include the video output portion 40 for displaying a display screen to prompt the spot registration process, a map database to store map data for the displaying process, and the inputting device 60 for the user to input an instruction on the display screen, as mentioned above. The map database is stored with the aforementioned search database, registration spot database and association database into the CD-ROM 33, the DVD-ROM 34, the hard disk 36 and so on. The map data is made of mesh data for each unit obtained by dividing a predetermined range of the map by latitude and longitude. The mesh data is generated for each of several scales. In the map indicated by the map data, a position of each spot existing in the map is defined by a set of latitude and longitude at least.

According to the fundamental operation of the spot registration process in this example, once the user selects via the inputting device 60 at least one search spot and at least one registration spot from among spots on the map displayed in advance by the video output portion 40 on the display screen on the basis of the map data, thereby the parent data is selected. More specifically, this selective operation will be explained with reference to FIG. 5.

On the display screen 301 (e.g. a display screen of the display 44 shown in FIG. 3), there is displayed a departure site 303 and a destination site 305 which are set during a searching process to be performed in the navigation apparatus according to a procedure mentioned below, as well as an optimal route 307 from the departure site 303 to the destination site 305 obtained during the searching process. In a state that such a screen is displayed, if the user designates, via the inputting device 60, a spot 309 other than the departure site 303 and the destination site 305 from among spots on the map displayed on the display screen 301, the control portion 20 (i.e. the CPU 22) displays a message such as "Is this spot to be registered in association with the destination site (or the departure site) ?" on a message portion 311 of the display screen 301 to prompt the user to proceed the spot registration process, for a judgement whether or not the designated spot 309 is to be registered in association with the departure site 303 and/or the destination site 305.

Then, if the user inputs, via the inputting device 60, an instruction of prompting the spot registration process, i.e. an instruction of registering the designated spot 309 in association with the departure site 303 and/or the destination site 305, the control portion 20 of the navigation apparatus starts the spot registration process.

With reference to FIG. 6, an explanation will be made to the spot registration processing in the case that a registration spot is registered in association with the search spot. Incidentally, also in the case that a new registration spot is registered in association with another registration spot already registered, the same operation as the spot registration process mentioned below will be performed. Therefore, the spot registration process in the latter case will be omitted.

In the operation explained with reference to FIG. 5, the control portion 20 reads the search spot data 201 relating to the departure site 303 and the destination site 305 that are the search spots to be associated with the designated spot 309, as well as the position information 205 of the search spot relating to this search spot data 201 and the first identification information 203 given to this search spot data 201, and stores them into the RAM 24. Then, the control portion 20 searches the association database for the association data 213 whose parent data is the search spot data 201 relating to a "user-selected (or user-designated) search spot" such as the destination site 305 explained with reference to FIG. 5, on the basis of either this search spot data 201, the first identification information relating to this search spot data 201 or the search spot position information 205 (step S111). Incidentally, if the first identification information 203 is not given to the search spot data 201 in the search database, the control portion 20 searches for the association data 213 on the basis of either the search spot data 201 or the search spot position information 205.

As the result, if the association data 213 whose parent data is the search spot data 201 relating to the selected search spot exists (step S111: Yes), the control portion 20 reads the association data 213 from the association database and stores it into the RAM 24. Furthermore, the control portion 20 generates the registration spot data 207 relating to a user-selected registration spot such as the designated spot 309 explained with reference to FIG. 5, and gives the second identification information 209 to the generated registration spot data 207, and further extracts the position information 211 of the registration spot from the map data. Furthermore, the control portion 20 updates the association data 213 by associating the second identification information 209 given to the generated registration spot data 207 with the parent data of the association data 213 searched from the association database (step S112). Incidentally, the registration spot data 207 generated by the control portion 20 is stored into the registration spot database in association with the second identification information 209 and the registration spot position information 211. Then, the control portion 20 terminates the fundamental operation of the spot registration process.

On the other hand, if the association data 213 including the parent data relating to the selected search spot does not exist (step S111: No), the control portion 20 generates the registration spot data 207 according to the same operation as the step S112 and further generates the association data 213 by associating (or linking) the second identification information 209 given to the generated registration spot data 207 with the parent data (i.e. the search spot data relating to the destination site) relating to the selected search spot (step S113). Incidentally, the association data 213 generated by the control portion 20 is stored into the association database. Then, the control portion 20 terminates the fundamental operation of the spot registration process.

Incidentally, at the step S112 or the step S113, an input screen to prompt an input of a name of a to-be-registered registration spot may be displayed on the display 44, so that the control portion 20 generates the registration spot data 207, by means of the name (name data) inputted by the user via the inputting device 60 on the basis of this input screen.

On the other hand, in this example, with regard to the operation explained with reference to FIG. 5, if an instruction of registering the designated spot 309 independently of the departure site 303 or the destination site 305 is inputted via the inputting device 60, the registration spot data 207 corresponding to the designated spot 309 may be generated and then the generated registration spot data 207 may be stored into the registration spot database without association with the parent data for example, according to the same operation at the step S112 or the step S113.

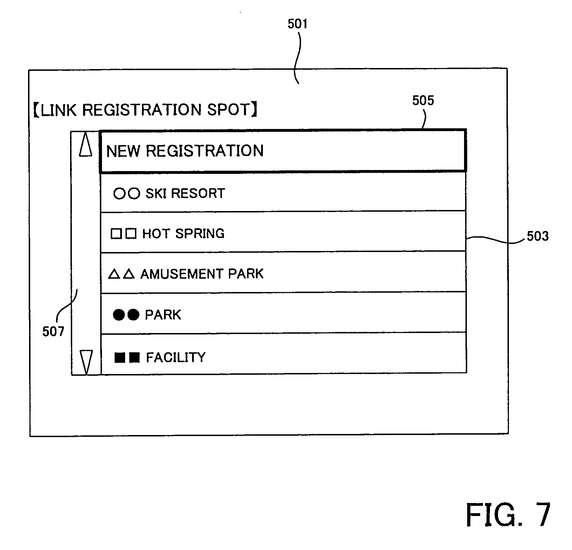

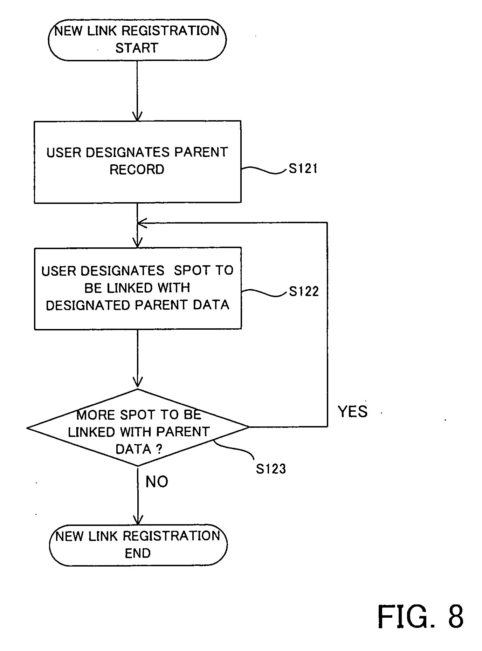

Now, with reference to FIG. 7 to FIG. 10, various editings in the spot registration process are explained. FIG. 7 illustrates a display screen to prompt the user to add new association data 213 to another association data 213 already generated. FIG. 8 illustrates an operational flow of generating the new association data 213.

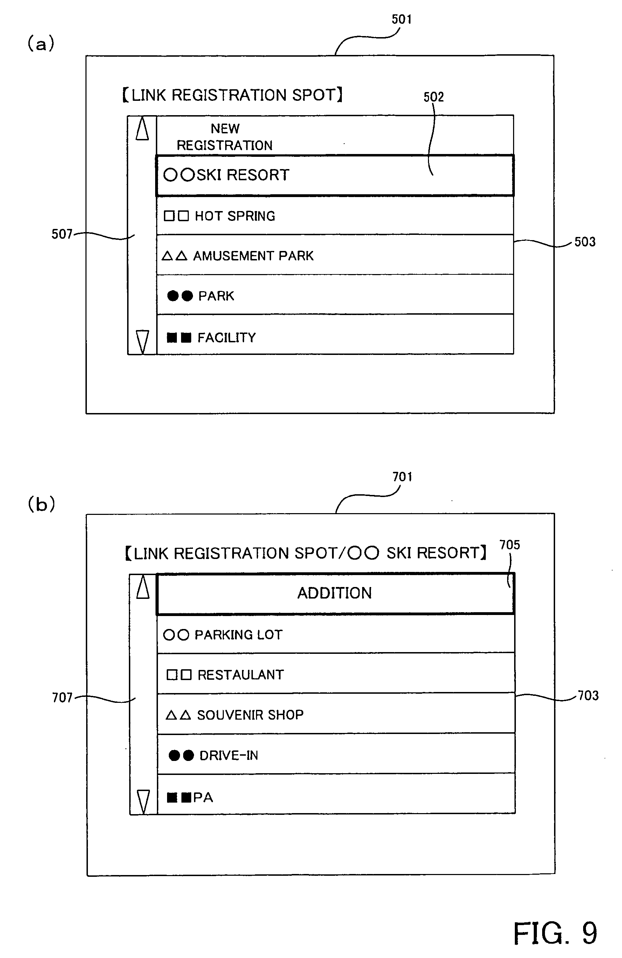

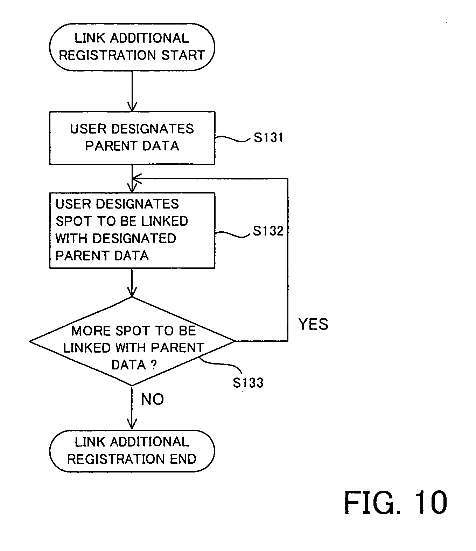

On the other hand, FIG. 9 (a) and FIG. 9 (b) each illustrates generally a display screen displayed on the display 44, in an adding process of adding new registration spot data 207 to be associated with the parent data to another registration spot data 207 associated with the parent data via at least one association data 213. FIG. 9 (a) generally illustrates a display screen displayed on the display 44 in the adding process. FIG. 9 (b) generally illustrates another display screen displayed on the display 44 in the adding process. On the other hand, FIG. 10 illustrates an operational flow of the adding process.

Firstly, with reference to FIG. 7 and FIG. 8, a generating process of new association data 205 will be explained.

Firstly, the control portion 20 reads the association data 213 stored into the association database and stores it into the RAM 24. The parent data of the association data 213 read by the control portion 20 is made of the search spot data 201 or the registration spot data 207. The video output portion 40 displays the parent data of the association data 213 read by the control portion 20. As the result, the display screen 501 shown in FIG. 7 is displayed on the display 44. More specifically, on this display screen 501, there are displayed a name of the search spot indicated by the displayed search spot data 201 (i.e. the parent data), or a list 503 including therein a name of the registration spot indicated by the displayed registration spot data 207 (i.e. the parent data). The list 503 is displayed with a scrolling device 507 by means of which the user can scroll the list 503 displayed on the display screen 501 upwardly and downwardly relative to the display screen 501, so that the user can overview the list 503.

Furthermore, in this example, the list 503 on the display screen 501 is displayed with a menu "new registration" 505 therein under control of the control portion 20. If the user selects via the inputting device 60 the menu "new registration" 505 in the list 503, the control portion 20 starts generating process of the association data 213.

Now, with reference to FIG. 8, an explanation will be made to a process of generating new association data 213 indicating a relationship between the search spot and the registration spot. Incidentally, the same operation as the process explained below will be performed, also in the case that new association data indicating inter-relationships among the plurality of registration spots.

In FIG. 8, firstly, the control portion 20 selects the parent data of the new association data 213 to be newly generated (step S121). More specifically, if the user inputs via the inputting device 60 name data indicating a name of at least one spot from among spots on the map, the control portion 20 searches the search database for the search spot data 201 relating to the inputted name data, on the basis of the inputted name data. Then, the control portion 20 reads the searched search spot data 201 with the position information 205 relating to the searched search spot data 201 and the first identification information 203 given to the searched search spot data 201 from the search database and then stores them into the RAM 24, so that the search spot data 201 is selected as the parent data.

Furthermore, the control portion 20 reads the map data from the map database and stores it onto the RAM 24, so that the video output portion 40 displays the search spot corresponding to the parent data onto the map, on the basis of the parent data, the position information 205 of the parent data and the map data. The user refers to the map, and designates a new registration spot from spots on the map, similarly to the operation explained with reference to FIG. 5. The control portion 20 generates the registration spot data 207 corresponding to the designated registration spot, and generates the association data 213 to associate the generated registration spot data 207 with the selected parent data, according to the same operation as the step S112 in FIG. 6 (step S122).

Then, the control portion 20 makes the video output portion 40 display, on the display screen of the display 44, a message whether or not further registration spot is to be registered, and thereby judges whether or not the new registration spot data 207 is to be generated (step S123).

If the user inputs, via the inputting device 60, an instruction of registering further registration spot (step S123: Yes), the control portion 20 performs the process of the step S122 again. If the user inputs via the inputting device 60 an instruction of further registering no registration spot (step S123: No), the control portion 20 terminates generating process of the association data 213.

Now, with reference to FIG. 9 (a), FIG. 9 (b) and FIG. 10, an explanation will be made to an adding process of adding the new registration data 207 to be associated with the parent data to another registration spot data 207 associated with this parent data via at least one association data 213. Firstly, with reference to FIG. 9 (a) and FIG. 9 (b), an outline of this adding process will be explained. At the start of this adding process, the video output device 40 displays the display screen 501, according to the same operation as explained with reference to FIG. 7. As shown in FIG. 9 (a), the list 503 is displayed with the scrolling device 507 on the display screen 501. Then, the user selects, via the inputting device 60, a name of at least one search spot or a name of at least one registration spot, such as ".....ski resort" 502, from the list 503.

With reference to FIG. 9 (b), an explanation will be made to an operation to be performed after the name of the search spot is selected in FIG. 9 (a). Incidentally, the following operation will be the same as in the case that a registration name is selected in FIG. 9 (a).

The control portion 20 reads the registration spot data 207 associated with the parent data on the basis of the association data 213 whose parent data is the search spot data 201 indicating the selected name of the search spot, such as "....ski resort" 502, from the registration spot database onto the RAM 24. Then, the video output device 40 displays the registration spot data 207 read by the control portion 20. As the result, a display screen 701 shown in FIG. 9 (b) is displayed on the display 44. More specifically, onto this display screen 701, there is displayed a list 703 including therein the name of the registration spot indicated by the displayed registration spot data 207. The list 703 is displayed with a scrolling device 707 the same as the scrolling device 507 explained with reference to FIG. 7.

Furthermore in this example, on the display screen 701, the list 703 is displayed with a menu "addition" 705 therein under control of the control portion 20. If the user selects via the inputting device 60 the menu "addition" 705 in the list 703, the control portion 20 performs the same operation as the step S122 in FIG. 8, so that the name of the registration spot indicated by the newly generated registration spot data 207 is added to the list and displayed.

Thus, a specific procedure of the adding process explained with reference to FIG. 9 (a) and FIG. 9 (b) will be discussed, with reference to FIG. 10. This adding process is started by a fact that the video output device 40 displays the display screen 501 explained with reference to FIG. 9 (a). In this adding process, in FIG. 10, a name of at least one search spot data or a name of at least one registration spot is selected from the list 503 displayed on the display 501, according to the operation or procedure explained with reference to FIG. 9 (a) (step S131). Namely, the parent data is selected.

Now, an explanation will be made to various processes to be performed after the name of the search spot is selected. Incidentally, the following operation is the same as in the case that the name of the registration spot is selected at the step S131.

Next, the control portion 20 performs the same operation as explained with reference to FIG. 9 (b), so that the name of the registration spot indicated by the newly generated registration spot data is added and displayed (step S132).

Then, the control portion 20 performs the same processing as the step S123 in FIG. 10 (step S133).

If the user inputs via the inputting device 60 an instruction of further registering the registration spot (step S133: Yes), the control portion 20 performs the process of the step S132. If the user inputs via the inputting device 60 an instruction of further registering no registration spot (step S133: No), the control portion 20 terminates the adding process.

Furthermore, in various editing processes in the spot registration process, in addition to or instead of the adding process and the generating process explained above, one or more registration spot data 207 may be deleted from registration spot data 207 associated by at least one association data 213 with the parent data. More specifically, if the user selects via the inputting device 60 a name of at least one registration spot from the list 703 displayed on the display screen 701, according to the same operation as explained with reference to FIG. 9 (a) and FIG. 9 (b), the control portion 20 deletes the second identification information 209 relating to the registration spot data 207 indicating the selected name of the registration spot, from the association . data 213. Incidentally, accompanying with this deletion, the control portion 20 may delete at least one registration spot data 207, the second identification information 209 given to this registration spot data 207 and the position information 211 of the registration spot relating to this registration spot data 207.

According to the spot registration process in this example explained above, the control portion 20 can register a desired spot and register the desired spot in association with the search spot or the already registered registration spot.

Therefore, according to the spot registration process in this example, referring to the search database and searching the plurality of search spots for one search spot, and further referring to the association database make it possible to identify the association data 213 indicating a predetermined item relating to the registration spot registered in advance in association with said one search spot. Therefore, as a search result, (i) the search spot data 201 and (ii) one or more registration spot data 207, which are registered in advance into the registration spot database by the user as registration spot data 207 corresponding to the search spot data 201, can be obtained quickly and easily, via the association data.

Furthermore, according to the spot registration process, the same benefit as in the case that the search spot is searched can be obtained, even in the case that one registration spot is searched from among the plurality of registration spots.

Furthermore, according to the spot registration process in this example, the registration spot data 207 can be edited or deleted. Therefore, these editing and deletion make it possible to customize the registration spot data 207 and the association data 213, and to construct the registration spot database and the association database in a predetermined form or format.

Incidentally, in the spot registration system in this example, if a desired spot is designated according to the procedure explained with reference to FIG. 5, or if name data indicating the name of the desired spot is inputted, the control portion 20 may register the desired spot automatically according to the same procedure as explained with reference to FIG. 6. Alternatively, if a instruction to perform various editings is inputted, the control portion 20 may perform automatically various editings as explained with reference to FIG. 7 to FIG. 10.

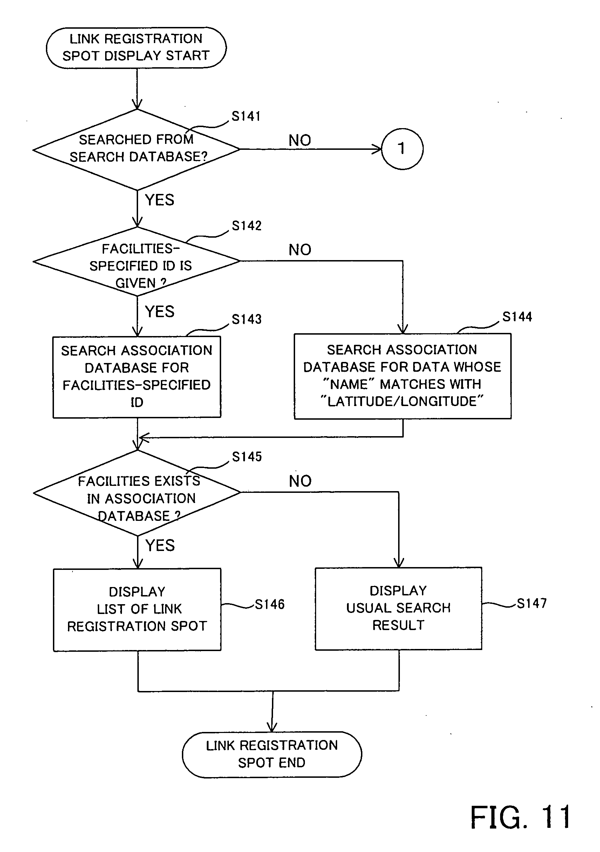

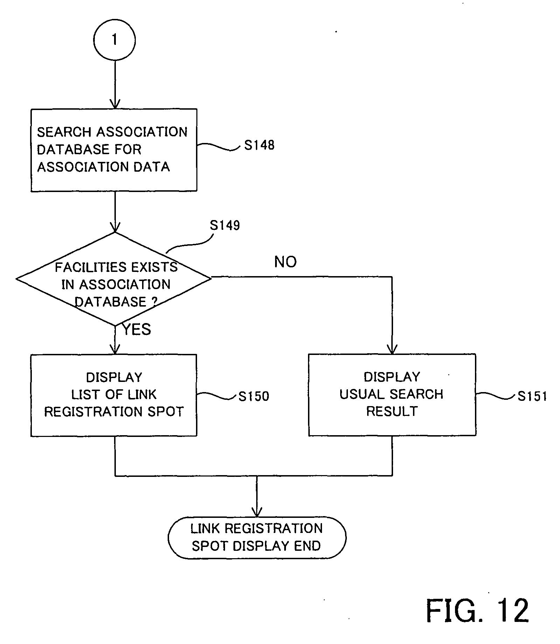

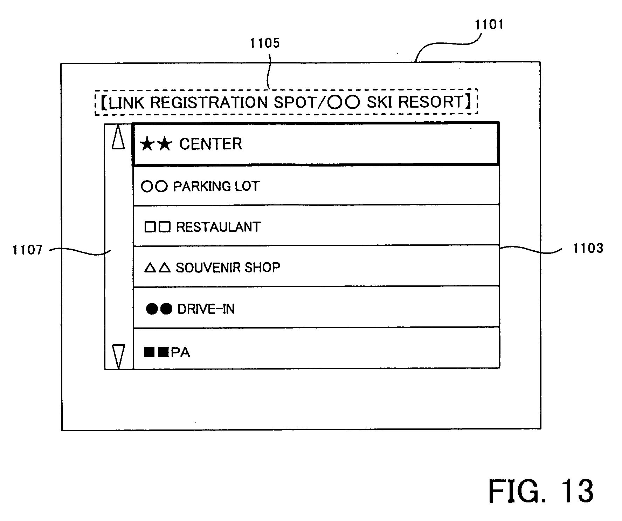

Now, with reference to FIG. 11 to FIG. 13, an explanation will be made to a searching process to be performed in the search system included in the navigation apparatus in this example. FIG. 11 is a flow chart illustrating an operational flow in part of the searching process. FIG. 12 is a flow chart illustrating another operational flow in part of the searching process. One searching process is indicated by these two flow charts shown in FIG. 11 and FIG. 12. FIG. 13 is a view generally illustrating a display screen displayed on the display 44 in the searching process in this example.

In addition, the main construction of the search system in this example is the almost same as the spot registration system explained above.

In FIG. 11, firstly, if the user inputs via the inputting device 60 name data indicating a name of one spot from among spots on the map, the control portion 20 searches the search database on the basis of the inputted name data. In this time, it is judged whether or not the search spot data relating to the inputted name data is searched from the search database (step S141).

If the search spot data 201 relating to the inputted name data is searched from the search database (step S141: Yes), it is judged whether or not the first identification information 203 such as a facilities-specified ID is given to the search spot data 201 (step S142).

If the first identification information 203 is assigned to the searched search spot data 201 (step S142: Yes), the control portion 20 reads the search spot data 201, as well as the position information 205 of the search spot relating to this search spot data 201 and the first identification information 203 given to this search spot data 201, from the search database and stores them into the RAM 24. Next, the control portion 20 search the association database for the association data 213 whose parent data is the search spot data 201 to which the read first identification information 203 is assigned, on the basis of the read first identification information 203 (step S143).

If the first identification information 203 is not assigned to the searched search spot data 201 (step S142: No), the control portion 20 reads the search spot data 201 as well as the position information 205 of the search spot relating to this search spot data 201 from the search database, and stores them into the RAM 24. Next, the control portion 20 searches the association database for the association data 213 whose parent data is the read search spot data 201, on the basis of the search spot data 201 and the position information 205 of the search spot relating to this search spot data 201 (step S144).

The control portion 20 judges whether or not the association data 213 as the search object is stored in the association database (step S145). Namely, the control portion 20 judges whether or not facilities indicated by the association data 213 as the search object exist in the association database.

If the association data 213 as the search object is searched from the association database (step S145: Yes), the control portion 20 reads the searched association data 213 from the association database and stores it into the RAM 24. Next, the control portion 20 searches the registration spot database for the registration spot 207 associated with the parent data of the association data 213, on the basis of the searched association data 213. Then, the control portion 20 reads the searched registration spot data 207 from the registration spot database and stores it into the RAM 24. Then, the control portion 20 makes the video output portion 40 display the searched search spot data 201 as well as the searched registration spot data 207 (step S146). Then, the control portion 20 terminates the searching process.

On the other hand, if the association data 213 as the search object is not stored in the association database (step S145: No), the control portion 20 makes the video output portion 40 display the searched search spot data 201 (step S147). Incidentally, the control portion 20 may make the video output portion 40 display the search spot corresponding to the search spot data 201, on the basis of the searched search spot data 201, the position information 205 of this search spot and the map data, which is read from the map database. Then, the control portion 20 terminates the searching process.

Furthermore, in FIG. 11, if the search spot data 201 relating to the inputted name data is not searched from the search database (step S141: No), the control portion 20 searches the registration spot database for the registration spot data 207 relating to the inputted name data. Then, the control portion 20 reads the searched registration spot data 207, as well as the facilities-specified ID given as the second identification information 209 to this registration spot data 207 and the position information 211 of the registration spot relating to this registration spot data 207, from the registration spot database and stores them into the RAM 24.

Then, in FIG. 12, the association data 213 including the parent data relating to the read second identification information 209 is searched from the association database, on the basis of the read second identification information 209 relating to the searched registration spot data 207 (step S148).

The control portion 20 judges whether or not the association data 213 as the search object is stored in the association database (step S149). Namely, the control portion 20 judges whether or not facilities indicated by the association data 213 as the search object exist in the association database.

If the association data 213 as the search object is searched from the association database (step S149: Yes), the control portion 20 reads the searched association data 213 from the association database and stores it into the RAM 24. Next, the control portion 20 searches the registration spot database for the registration spot data 207 associated with the parent data of the association data 213, on the basis of the association data 213. Then, the control portion 20 reads the searched registration spot data 207 from the registration spot database and stores it into the RAM 24. Then, the control portion 20 makes the video output portion 40 display the searched registration spot data 207 (step S150). Then, the control portion 20 terminates the searching process.

On the other hand, if the association data 213 as the search object is not stored in the association database (step S149: No), the control portion 20 makes the video output portion 40 display the searched registration spot data 207 (step S151). Incidentally, the control portion 20 may make the video output portion 40 display the registration spot corresponding to the registration spot data 207 on the map on the basis of the retrieved registration spot data 207, the registration spot position information 211 and the map data which is read from the map database. Then, the control portion 20 terminates the searching process.

With reference to FIG. 13, an explanation will be made to a structure of the display screen 1101 displayed on the display 44 at the step S146 or the step S150. On the display screen 1101, there are displayed a name "....ski resort" indicated by the parent data of the searched association data 213 at a display portion 1105, and a list 1103 including a name of the registration spot indicated by the registration spot data 207 associated with the parent data. The list 1103 is displayed with a scrolling device 1107 the same as the scrolling device 507 explained with reference to FIG. 7.

That is, according to the searching process in this example, the user can perform a search while at least two spots on the map are associated with each other. More specifically, the user can search not only one spot but also other spots in the same time, by searching for either one of these at least two spots that are registered in association with each other.

Furthermore, the user can select the search spot or the registration spot corresponding to the parent data displayed on the display portion 1105 as either the departure site, the destination site, the "on route site" or "stop by site", via the inputting device 60, on the display screen 1101 shown in FIG. 13. In addition, user can select the name of at least one registration spot as either the departure site, the destination site, the "on route site" or the "stop by site" from among names of a plurality of registration spots included in the displayed list 1103. That is, the user can search for the departure site, the destination site, the "on route site" and "stop by site" in association with each other, not independently of each other.

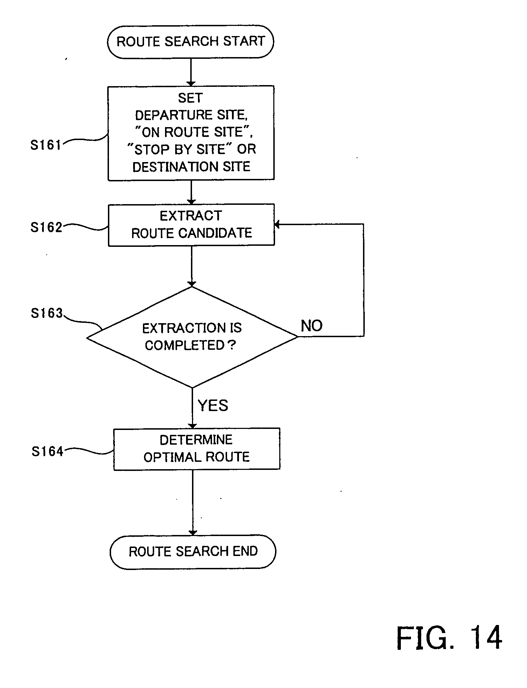

Now with reference to FIG. 14, an explanation will be made to a route searching process to be performed by the navigation apparatus in this example. FIG. 14 illustrates an operational flow of the route searching process.

In FIG. 14, firstly, the departure site, the destination site, the "on route site" and the "stop by site" are set according to the searching process explained with reference to FIG. 11 and FIG. 12 (step S161). More specifically, the user sets the departure site, the destination site, the "on route site" or the "stop by site", by selecting the name of the spot from the list 1103, via the inputting device 60, on the basis of the list 1103 shown in FIG. 13 and displayed on the display screen 1101, according to the procedure as explained with reference to FIG. 11 and FIG. 12. Incidentally, a spot searched independently may be set as the departure site, the destination site, the "on route site" or the "stop by site", according to the procedure explained with reference to FIG. 11 and FIG. 12.

Then, the control portion 20 reads the map data from the map database, and stores it into the RAM 24. Such a reading of the map data is preferably achieved by reading, at the same time, map data of a certain area including the departure site, the destination site, the "on route site" or the "stop by site". However, the map data may be read by smaller area or unit, as appropriate. The map data herein includes route search data allowing the optimal route search with regard to a road existing on the map, based on a predetermined mathematical algorithm, such as link data indicating a link corresponding to the road, node data indicating a node corresponding to the connection point, and so on. The control portion 20 extracts a route candidate from the departure site to the destination site via the "on route site" or "stop by site" in a predetermined algorithm such as the Dijkstra algorithm, on the basis of the route search data included in the map data (step S162). The control portion 20 extracts the route candidate from the departure site to the destination site via the "on route site" or "stop by site" repeatedly until the extracted candidates becomes a predetermined number for example (e.g. one or more), or repeatedly for a predetermined time period or by a predetermined number (step S163: No). Then, once the extraction of the candidates is completed (step S163: Yes), the route candidate from the departure site to the destination site via the "on route site" or "stop by site" whose cost is the lowest is determined as the optimal route. Alternatively, if only one route candidate is extracted, this candidate is determined as the optimal route (step S164). Then, a series of route searching processes is terminated.

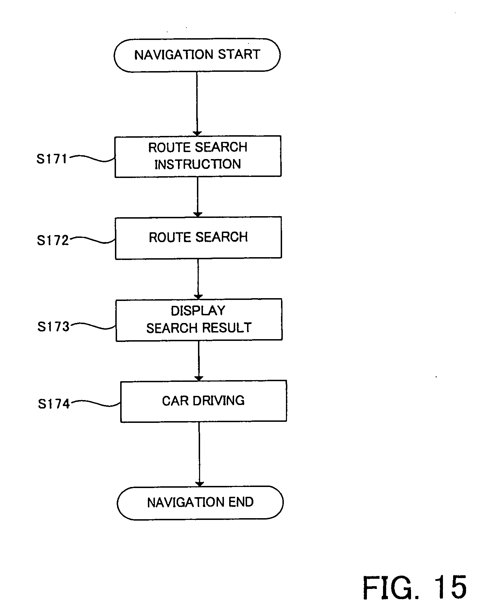

Now, with reference to FIG. 15, an explanation will be made to the navigation process performed by the navigation apparatus in this example. FIG. 15 illustrates an operational flow of the navigation processing.

In FIG. 15, firstly, if the driver (the user) gives an instruction to the navigation apparatus to determine the optimal route from among route candidates from the departure site to the destination site via the "on route site" or "stop by site" (step S171), the control portion 20 of the navigation apparatus performs a route search process (step S172). Next, the optimal route determined by the route search process is presented to the user from the video output portion 40 or the audio output portion 50 (step S173). On this occasion, a current position is obtained from a positioning device such as the GPS portion 18 or the like, and displayed with the optimal route on the displayed map. The driver can drive the car or vehicle along the determined optimal route (step S174), and then reaches the destination site.

Incidentally, during such a navigation process, the user can register a "casually stop by spot" or "casually pass by spot" as the registration spot, according to the procedure explained with reference to FIG. 5 to FIG. 10. This registration may be achieved by associating the registration spots with each other, or associating the registration spot with the destination site or the departure site. Then, the user can perform a search by associating the registered spots with each other, or by associating the registered spot with the departure site or the destination site, and can set again such a searched spot as either the departure site, the destination site, the "on route site" or the "stop by site".

### (Second Example)

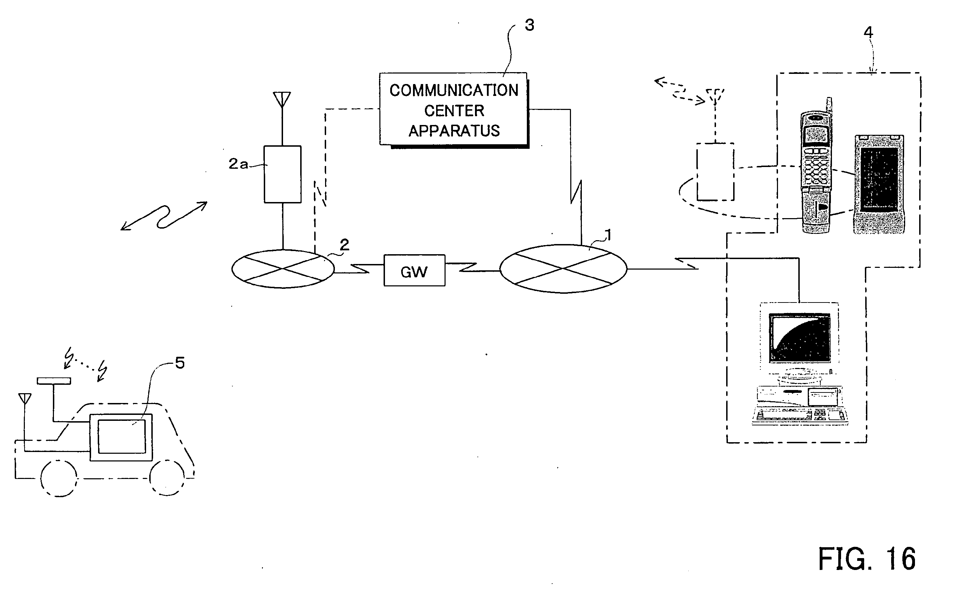

The second example of the navigation system according to the present invention will be discussed, with reference to FIG. 16. The second example is constructed as a communication navigation system. FIG. 16 is a block diagram illustrating an entire construction of the communication navigation system of the second example.

In FIG. 16, in this example, there are provided with: a digital fixed communication network 1; and a digital mobile communication network 2, which are connected via a gateway (GW) device for a communication protocol conversion. In these communication networks, for example, an IP packet communication is performed under a TCP/IP (Transmission Control Protocol/Internet Protocol) environment. Incidentally, an analog fixed communication network may be employed instead of the digital fixed communication network 1.

A communication center apparatus 3 for a communication navigation supplier; and a personal computer that may be disposed at the user's home as an example of a user communication terminal 4 and so on are connected to the digital fixed communication network 1. A cell phone, a PDA (Personal Digital Assistants) and so on, as another example of the communication terminal 4, are accommodated via an air interface within a cell base station 2a of the digital mobile communication network 2. Furthermore, an on-vehicle communication navigation terminal 5 to be mounted on the user's vehicle is further accommodated within the cell base station 2.

The communication center apparatus 3 accommodates and maintains the map database, the search database, the registration spot database and the association database, which are conventionally accommodated and maintained within the on-vehicle navigation apparatus and have the great data volume. Furthermore, the communication center apparatus 3 takes the place of the on-vehicle navigation apparatus in the spot registration process, the searching process or the optimal route searching process, any of which involves a great workload.

The communication terminal 4 send to the communication center apparatus 3 a request for supplying the road map data, or a request for obtaining the optimal route. The communication terminal 4 also designates an address to which the requested road map data should be sent. Incidentally, such a designation or request may be sent from the communication navigation terminal 5, similarly to the communication terminal 4.

The communication navigation terminal 5 is for on-vehicle use, and is provided with a record medium such as a DVD-ROM 34, a CD-ROM 33 and so on for storing minimum map data to display the map. Otherwise the communication navigation terminal 5 downloads the map data from the map database of the communication center apparatus 3. Incidentally, the communication navigation terminal 5 can perform the route guidance, such as a direction of "go straight", "turn left" or "turn right" at each guidance point by a video output on the displayed map or by an audio output from the speaker, on the basis of the optimal route data indicating the optimal route, as well as the guidance information of the optimal route or the map data around the optimal route.

Thus, according to the communication navigation system in the second example, a necessity of storing a great volume of various data, such as route search data used in the Dijkstra method for example, is eliminated at the communication navigation terminal 5. Thereby, a required storage volume at the navigation terminal 5 becomes much smaller than that at the communication center apparatus 3. Additionally, it is not necessary at the on-vehicle navigation apparatus to perform the spot registration process or the searching process, otherwise the route search, any of which involves a heavy workload and conventionally performed at the communication navigation terminal side. Thereby, a required workload at the navigation terminal 5 becomes much smaller than that at the communication center apparatus 3. Additionally, it is very advantageous, also for a data volume of individual data to be transmitted and received such as map data, that minimum data is transmitted to perform the map display or the route guidance at the communication navigation terminal 5, and thereby the transmission cost or the transmission workload becomes relatively low.

As discussed in detail, according to these examples of the invention, generating link registration data (i.e. the registration spot data and/or the association data) makes it possible to register at least two spots on the map in association with each other and perform a searching with these two spots being associated with each other on the basis of the link registration data. As the result, at least two spots on the map can be searched relatively easily.

Incidentally, the spot registration system, the search system or the navigation system according to the present invention is applicable not only to on-vehicle use discussed in the aforementioned various embodiments or examples, but also to various carriers including air planes, shipping, motor cycles and so on, or applicable to various navigation apparatus for pedestrians or animals equipped with cell phones or PDA's.

## Claims

1. A spot registration system **characterized in that** said spot registration system comprises:
a search database (1001) for storing a plurality of search spot data each indicating a name of a search spot searchable by a search system;
a register device (1004) for registering a name of a desired spot as a name of a spot associated wit the search spot;
a registration spot database (1002) for storing registration spot data indicating the name of the desired spot registered by said register device (1004); and
an association database (1003) for storing association data indicating a relationship between the search spot data and registration spot data.

2. The spot registration system according to claim 1, **characterized in that**
said search database (1001) further stores first identification information given uniquely to the search spot data, in association with the search spot data,
said registration spot database (1002) further stores second identification information given uniquely to the registration spot data, in association with the search spot data, and
said association database (1003) stores, as the association data, data indicating an one-on-one relationship or a many-to-one relationship between the first identification information and the second identification information.

3. The spot registration system according to claim 1, **characterized in that**
said search database (1001) further stores position information of the search spot, in association with the search spot data, and
said association database (1003) stores, as the association data, data indicating an one-on-one relationship or a many-to-one relationship between the registration spot data and at least one of (i) the position information of the search spot and (ii) the search spot data.

4. The spot registration system according to any one of claims 1 to 3, **characterized in that**
said register device (1004) further edits or deletes the registration spot data stored in said registration spot database (1002).

5. The spot registration system according to any one of claims 1 to 4, **characterized in that**
the registering at said register device (1004) is performed by a user.

6. The spot registration system according to any one of claims 1 to 4, **characterized in that**
the registering at said register device (1004) is performed automatically in response to a result of a predetermined process.

7. A search system **characterized in that** said search system comprises:
a search database (1001) for storing a plurality of search spot data each indicating a name of a search spot;
a registration spot database (1002) for storing registration spot data indicating a name of a registered spot or a name of a spot registered in association with the search spot;
an association database (1003) for storing association data indicating a relationship between the search spot data and the registration spot data;
a searching device (1201) for searching the search database (1001) for the search spot data, then searching the association database (1002) for the association data on the basis of the searched search spot data, and then searching the registration spot database (1003) for the registration spot data on the basis of the searched association data; and
a display device (1202) for displaying the searched search spot data and the searched registration spot data in a predetermined format.

8. The search system according to claim 7, **characterized in that**
said search database (1001) further stores first identification information given uniquely to the search spot data, in association with the search spot data,
said registration spot database (1002) further stores second identification information given uniquely to the registration spot data, in association with the registration spot data,
said association database (1003) stores, as the association data, data indicating an one-on-one relationship or a many-to-one relationship between the first identification information and the second identification information, and
said searching device (1201) searches for the association data on the basis of the first identification information relating to the searched search spot data, and searches for the registration spot data on the basis of the second identification information relating to the searched association data.

9. The search system according to claim 7, **characterized in that**
said search database (1001) further stores position information of the search spot, in association with the search spot data,
said association database (1003) stores, as the association data, data indicating an one-on-one relationship or a many-to-one relationship between the registration spot data and at least one of the position information of the search spot and the search spot data, and
said searching device (1201) searches for the association data, on the basis of at least one of the searched search spot data and the position information of the search spot.

10. The search system according to any one of claims 7 to 9, **characterized in that**
said association database (1003) further stores the association data indicating a relationship between at least two of registration spot data stored in the registration spot database (1002),
said searching device (1201) searches the registration spot database (1002) for at least one of the registration spot data, then searches the association database (1003) for the association data on the basis of the searched registration spot data, and then searches the registration spot database (1002) for the registration spot data on the basis of the searched association data, and
said display device (1202) further displays the searched registration spot data.

11. The search system according to any one of claims 7 to 10, characterize in that said search system further comprises:
a register device (1004) for registering a name of a desired spot, as a name of a spot associated with the search spot.

12. A navigation system **characterized in that** said navigation system comprises:
a search system having: a search database (1001) for storing a plurality of search spot data each indicating a name of a search spot; a registration spot database (1002) for storing registration spot data indicating a name of a registered spot or a name of a spot registered in association with the search spot; an association database (1003) for storing association data indicating a relationship between the search spot data and the registration spot data; a searching device (1201) for searching the search database (1001) for search spot data, then searching the association database (1003) for the association data on the basis of the searched search spot data, and then searching the registration spot database (1002) for the registration spot data on the basis of the searched association data; and a display device (1202) for displaying the searched search spot data and the searched registration spot data in a predetermined format;
a positioning device (10, 18) for positioning a current position; and
a route guidance device (20) for performing a predetermined kind of route guidance, on the basis of the positioned current position as well as at least one of the registration spot data and the search spot data searched by said searching device (1201).

13. The navigation system according to claim 12, **characterized in that** said navigation system has a center apparatus (3) and a navigation terminal apparatus (5), which are connectable to each other via a communication line (1, 2), wherein
at least a part of said search system with said search database (1001), said registration spot database (1002) and said association database (1003) are disposed within said center apparatus (3), and
said positioning device (10, 18) and said route guidance device (20) are disposed within said navigation terminal apparatus (5).

14. A spot registration method of registering a desired spot, **characterized in that** said spot registration method comprises:
a first generating process of generating a plurality of registration spot data each indicating a name of the desired spot; and
a second generating process of generating association data indicating a relationship between (i) at least one of the plurality of search spot data each indicating a name of a search spot searchable by a search system and (ii) at least one of the plurality of registration spot data indicating a name of a registered spot associated with the search spot relating to the at least one search spot data.

15. A searching method **characterized in that** said searching method comprises:
a first searching process of searching for at least one of a plurality of search spot data each indicating a name of a search spot;
a second searching process of searching for at least one of a plurality of association data each indicating a relationship between the search spot data and registration spot data indicating a name of a registration spot which is associated with the at least one search spot, on the basis of the searched search spot data; and
a third searching process of searching for at least one of the plurality of registration spot data, on the basis of the searched association data.

16. A computer program **characterized in that** said computer program controls a computer provided for a search system having: a search database (1001) for storing a plurality of search spot data each indicating a name of a search spot; a registration spot database (1002) for storing registration spot data indicating a name of a registered spot or a name of a spot registered in association with the search spot; an association database (1003) for storing association data indicating a relationship between the search spot data and the registration spot data; a searching device (1201) for searching the search database (1001) for search spot data, then searching the association database (1003) for the association data on the basis of the searched search spot data, and then searching the registration spot database (1002) for the registration spot data on the basis of the searched association data; and a display device (1202) for displaying the searched search spot data and the searched registration spot data in a predetermined format, wherein
the program of instructions is for making the computer function as at least said searching device (1201).
